# EUROPÄISCHE PATENTANMELDUNG

(11) **EP 1 364 924 A1**
(43) Veröffentlichungstag der Anmeldung: **26.11.2003**
(21) Anmeldenummer: 03010455.8
(22) Anmeldetag: 09.05.2003
(51) Int. Cl.: C03C 17/36, C03C 17/38, C03C 17/34

(54) **Dekorblende mit metallischer Anmutung und Verfahren zu ihrer Herstellung**

(30) Priorität: 13.05.2002 DE 10221947
(71) Anmelder: Schott Glas, 55122 Mainz (DE)
(72) Erfinder: Zago, Guiseppe, 55100 Lucca (IT); di Nardo, Manuela, Dr., 55100 Lucca (IT); Martini, Claus, Dr., 55100 Lucca (IT)
(74) Vertreter: Fuchs Mehler Weiss & Fritzsche

(57) **Zusammenfassung**

Dekorblenden der vorgenannten Art finden typischerweise im Haushaltsbereich Anwendung, insbesondere als Bedienblende für Haushaltsgeräte oder als Rahmen für Sichtfenster von Haushaltsgeräten. Bislang wurde die metallische Anmutung der Blende durch Metallfolien oder -bleche erzielt, die auf dem jeweiligen Träger aufgeklebt wurden.

Die Erfindung sieht eine einfach auszubildende metallische Anmutung für die Dekorblende vor, indem der jeweilige Träger (1) eine kratzfeste, transluzente Frontflächenbeschichtung (5) sowie eine metallische Rückseitenbeschichtung (6) aufweist.

## Beschreibung

Die Erfindung bezieht sich auf eine Dekorblende mit metallischer Anmutung, bestehend aus einem zumindest transluzenten Träger, der eine metallische Bedeckung trägt.

Die Erfindung bezieht sich ferner auf ein Verfahren zur Herstellung einer derartigen Dekorblende.

Dekorblenden der vorgenannten Art finden typischerweise im Haushaltsbereich Anwendung, sei es als Bedienblende oder Frontscheibe für ein Haushaltsgerät wie Kochfeld, Backofen, Waschmaschine etc, oder sei es als dekorative Blende eines Möbels. Da das Design dieser Gegenstände des Haushaltsbereiches starken modischen Strömungen unterworfen ist, wirkt sich dies auch auf die Gestaltung der zugehörigen Blenden aus.

Derzeit verlangt der Markt u.a. Dekorblenden mit metallischer Anmutung.

Gemäß dem Stand der Technik werden derartige Metalleffekte auf dekorativen Blenden sowie Gerätefronten durch Aufbringen von mehr oder weniger dicken Metallfolien oder -blechen erreicht. So zeigt die EP 1 178 263 A2 eine Tür für einen Haushaltsofen, bei der auf einer die Frontscheibe bildenden Grundplatte aus Glas eine Türblende aus Aluminium mit doppelseitigem Klebeband aufgeklebt ist. Auch Blenden aus Edelstahl sind auf dem Markt vorhanden.

Es werden dabei generell Edelstahl- oder Aluminium-Zuschnitte bevorzugt, die über Stanztechnik hergestellt und mittels Verklebung auf die Front- oder Rückseite einer Dekorblende aufgebracht werden. Die Metallteile können eine gerichtete oder ungerichtete Struktur aufweisen.

Der Teile- und Montageaufwand und das Gewicht für ein solches Bauteil ist mit Nachteil sehr hoch. Zudem ist gegenüber der Verwendung von Bauteilen ohne Metallverblendung ein erhöhter konstruktiver Aufwand zu betreiben, um z.B. das Mehrgewicht auszugleichen. Außerdem erzeugen die Bleche auf den Dekorblenden Fugen, die einer leichten Reinigung hinderlich sind und haben häufig überstehende Ecken und Kanten, an denen ein Benutzer mit einem Kleidungsstück hängenbleiben kann.

Der Erfindung liegt die Aufgabe zugrunde, eine Dekorblende der eingangs genannten Art mit metallischer Anmutung zu schaffen, bei welcher der Teileund Montageaufwand sowie das Gewicht gegenüber dem Stand der Technik signifikant reduziert ist, und kein konstruktiver Mehraufwand hinsichtlich des Teiles, an dem die Blende angebracht wird, zu treiben ist, sowie die keine die Reinigung erschwerende Fugen und keine störenden überstehenden Ecken und Kanten aufweist.

Die Lösung dieser Aufgabe gelingt gemäß der Erfindung dadurch, daß der Träger eine kratzfeste, transluzente Frontflächenbeschichtung sowie eine metallische Rückseitenbeschichtung aufweist.

Da die erfindungsgemäße Dekorblende lediglich Beschichtungen, die den Träger umfassen, aufweist, ist praktisch kein Teile- und Montageaufwand gegeben, spielt das Gewicht keine Rolle mehr, entstehen keine die Reinigung erschwerenden Fugen bzw. störende Ecken und Kanten.

Das Verfahren zum Herstellen der erfindungsgemäßen Dekorblende mit metallischer Anmutung besteht gemäß der Erfindung aus den Schritten:
- Bereitstellen eines zumindest transluzenten Trägers,
- Versehen der einen, betrieblich vorderen Seite, mit einer durchgehenden kratzfesten transluzenten Beschichtung, basierend auf organischen oder keramischen Schichtsystemen mittels bekannter Auftragsverfahren wie Drucken, Gießen, Aufstrahlen, und
- Versehen der anderen, betrieblich rückwärtigen Seite mit einer metallischen Beschichtung vorzugsweise durch PVD-Magnetron-Sputtering.

Ausgestaltungen der erfindungsgemäßen Dekorblende mit metallischer Anmutung sind in den Unteransprüchen gekennzeichnet sowie ergeben sich auch aus der Figurenbeschreibung.

Anhand eines in den Zeichnungen dargestellten Ausführungsbeispieles einer dekorativen Blende mit Metallanmutung wird die Erfindung näher beschrieben. Als Ausführungsbeispiel ist dabei eine dekorative Bedienblende für ein Haushaltsgerät gewählt.

Es zeigen dabei:
- Fig. 1: in einer schematischen Darstellung eine Vorderansicht der Bedienblende mit Metallanmutung, und
- Fig. 2: eine Querschnitt-Ansicht entlang der Schnittlinie A - B in Fig. 1.

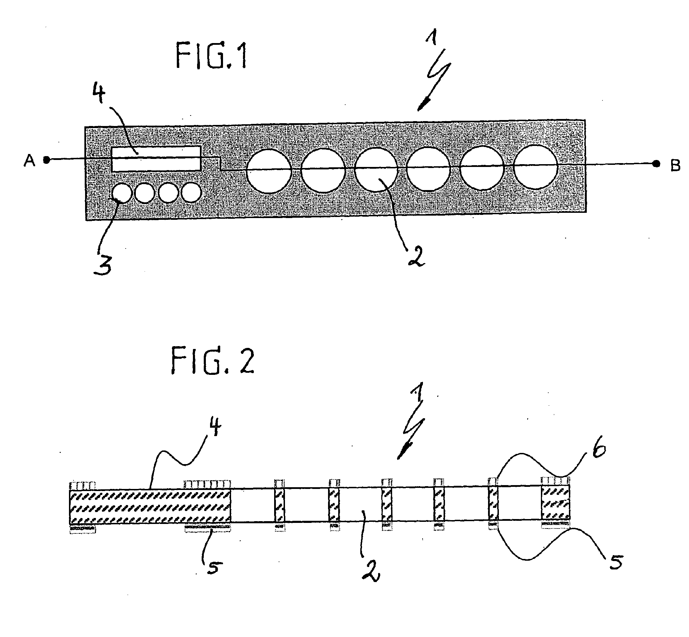

Die Figuren 1 und 2 zeigen eine Bedienblende für ein Haushaltsgerät, die einen transparenten Träger 1 aus Glas, Glaskeramik oder Kunststoff aufweist, der in erfindungsgemäßer Weise unter Realisierung einer Metallanmutung beschichtet wird, unter Freilassung eines Bereiches 2 für größere Stellelemente, eines Bereiches 3 für kleine Stellelemente und eines Bereiches 4 für ein Anzeigefeld. Dieser Träger weist durchgehend eine transluzente Frontflächen-Beschichtung 5 auf. Diese Beschichtung, die vorzugsweise auf einem bekannten organischen oder keramischen Schichtsystem basiert, ist in einem thermischen Vorspannprozeß kratzfest eingebrannt worden.

Die Frontflächenbeschichtung 5 ist vorzugsweise dekoriert, sei es durch eine farblose, strukturierte oder durch eine eingefärbte, ggf. auch strukturierte Beschichtung.

Die Frontflächenbeschichtung ist vorzugsweise mit einem bekannten Auftragsverfahren, wie Siebdruck, oder per Vorhangguß oder auch mittels Tintenstrahl-, Laserdruckverfahren oder mittels Transfertechnologie aufgebracht.

Danach wird die Rückseite des Trägers 1 der Bedienblende mit einer metallischen Beschichtung 6 versehen. Diese kann vorzugsweise mit PVD-Magnetron-Sputtering oder anderer bekannter Verfahren aufgebracht werden. Die Metalle der Beschichtung können z.B. aus der Gruppe Cr, Ni, Ti, Au, Ag, Al, Cu, Zn, Zr, Pt stammen.

Außerdem ist es möglich, durch Oxidation der Metallschichten bzw. durch Aufbringen von Metalloxiden, eine breite Palette an Farbeffekten zu erzielen.

Bei der metallischen Beschichtung der Rückseite müssen die Bereiche 2 bis 4 ausgespart bleiben. Dies kann auf verschiedene Art und Weise realisiert werden. Beispielsweise kann zunächst auf der Rückseite, beispielsweise per Siebdruck, eine Markierung entsprechend den auszusparenden Bereichen 2 - 4 aufgebracht werden. Im nachfolgenden Magnetron-Sputter-Verfahren wird dann das Metall z.B. Cr, vollflächig aufgebracht. Danach kann die Maskierung mit Hilfe eines Waschprozesses entfernt werden.

Es kann aber auch die Metallschicht ohne Maskierung vollflächig aufgetragen werden, wobei die Schicht in den Bereichen 2 - 4 nachträglich entfernt wird, z.B. durch eine Lasergravur.

Das Ergebnis ist eine Bedienblende, die eine silbrig metallische Anmutung aufweist, wie sie sonst nur mit Hilfe von Metallfolien oder Blechen möglich ist.

Dieser Effekt kann in entsprechender Weise auch bei anderen Blenden erzielt werden, beispielsweise bei Blenden von Haushaltsgeräte-Türen, bei Möbeln oder dergleichen.

## Patentansprüche

1. Dekorblende mit metallischer Anmutung, bestehend aus einem zumindest transluzenten Träger (1), der eine metallische Bedeckung trägt, **dadurch gekennzeichnet, daß** der Träger (1) eine kratzfeste, transluzente Frontflächenbeschichtung (5) sowie eine metallische Rückseitenbeschichtung (6) aufweist.

2. Dekorblende nach Anspruch 1, **dadurch gekennzeichnet, daß** die Frontflächenbeschichtung (5) auf einem organischen oder keramischen Schichtsystem basiert.

3. Dekorblende nach Anspruch 1 oder 2, **dadurch gekennzeichnet, daß** die Frontflächenbeschichtung (5) farblos ist.

4. Dekorblende nach Anspruch 1 oder 2, **dadurch gekennzeichnet, daß** die Frontflächenbeschichtung (5) eingefärbt ist.

5. Dekorblende nach Anspruch 3 oder Anspruch 4, **dadurch gekennzeichnet, daß** die Frontflächenbeschichtung (5) strukturiert ist.

6. Dekorblende nach einem der Ansprüche 1 bis 5, **dadurch gekennzeichnet, daß** die metallische Rückseitenbeschichtung (6) Metalle aus der Gruppe Cr, Ni, Ti, Au, Ag, Al, Cu, Zn, Zr, Pt oder Oxide davon enthält.

7. Dekorblende nach Anspruch 6, **dadurch gekennzeichnet, daß** die metallische Rückseitenbeschichtung (6) aufgesputtert ist.

8. Dekorblende nach Anspruch 6 oder 7, **dadurch gekennzeichnet, daß** die metallische Rückseitenbeschichtung (6) partiell unbeschichtete Bereiche aufweist.

9. Dekorblende nach einem der Ansprüche 1 bis 8, ausgebildet als Bedienblende.

10. Verfahren zum Herstellen einer Dekorblende mit metallischer Anmutung nach einem der Ansprüche 1 bis 8, mit den Schritten:
- Bereitstellen eines zumindest transluzenten Trägers,
- Versehen der einen, betrieblich vorderen Seite, mit einer durchgehenden kratzfesten transluzenten Beschichtung, basierend auf organischen oder keramischen Schichtsystemen mittels bekannter Auftragsverfahren wie Drucken, Gießen, Aufstrahlen, und
- Versehen der anderen, betrieblich rückwärtigen Seite mit einer metallischen Beschichtung vorzugsweise durch PVD-Magneten-Sputtering.
